# EUROPÄISCHE PATENTSCHRIFT

(11) **EP 0 791 038 B1**
(45) Veröffentlichungstag und Bekanntmachung des Hinweises auf die Patenterteilung: **07.04.1999**
(21) Anmeldenummer: 95939245.7
(22) Anmeldetag: 09.11.1995
(51) Int. Cl.: C09K 21/14, C09K 21/02, C08G 12/26, A62D 1/00

(54) **BRANDSCHUTZDECKEN AUS METALLBESCHICHTETEN MELAMIN-FORMALDEHYD-HARZFASERN**
FIRE PROTECTION COVERS MADE OF METAL COATED MELAMINE-FORMALDEHYDE RESIN FIBRES
BACHES DE PROTECTION CONTRE LE FEU EN FIBRES DE RESINE MELAMINE-FORMALDEHYDE ENDUITES DE METAL

(30) Priorität: 12.11.1994 DE 4440491
(43) Veröffentlichungstag der Anmeldung: 27.08.1997
(73) Patentinhaber: BASF AKTIENGESELLSCHAFT, 67056 Ludwigshafen (DE)
(72) Erfinder: GUENTHER, Erhard, D-67454 Hassloch (DE); REUTHER, Wolfgang, D-69118 Heidelberg (DE)
(86) Internationale Anmeldenummer: EP9504406
(87) Internationale Veröffentlichungsnummer: WO9615207

(56) Entgegenhaltungen:
- GB-A- 1 089 836
- GB-A- 2 203 157
- US-A- 4 088 620
- US-A- 4 269 944
- PATENT ABSTRACTS OF JAPAN Bd. 16, Nr. 063 (C-0911) 18 Februar 1992 & JP,A,3 261 412 (KANEBO) 21 November 1991
- PATENT ABSTRACTS OF JAPAN Bd. 005, Nr. 184 (C-080) 21 November 1981 & JP,A,56 107 012 (ASAHI CHEM IND) 25 August 1981
- PATENT ABSTRACTS OF JAPAN Bd. 014, Nr. 98 (M-095) 23 April 1990 & JP,A,2 039 928 (SHIN KOBE) 08 Februar 1990
- PATENT ABSTRACTS OF JAPAN Bd. 009, Nr. 150 (E-324) 25 Juni 1985 & JP,A,60 030 300 (KUMAGAI KATSUYOSHI) 15 Februar 1985
- Brockhaus Enzyklopädie in 24 Bänden, 19. Auflage, Band 7, F.A.Brockhaus Mannheim, 1988, Seiten 252-253
- Römpp Chemie-Lexikon, 9.Auflage, Georg Thieme Verlag, Stuttgart, 1992, Seiten 5065-5067

## Beschreibung

Die vorliegende Erfindung betrifft die Verwendung von metallbeschichteten Melamin-Harzfasern zur Herstellung von Brandschutzdecken.

Des weiteren betrifft die Erfindung Brandschutzdecken, enthaltend
(a) 5 bis 95 Gew.-% metallbeschichtete Melamin-Harzfasern,
(b) 95 bis 5 Gew.-% flammfeste Fasern, ausgewählt aus der Gruppe, bestehend aus Glasfasern, flammfester Wolle, flammfester Viskose und Aramidfasern, und
(c) 0 bis 25 Gew.-% Füllstoffe,
ein Verfahren zur Herstellung von Brandschutzdecken, ein Verfahren zum Löschen von Bränden und brennenden Gegenständen, ein Verfahren zum Schutz von Gegenständen vor Feuer, die Verwendung von Brandschutzdecken, enthaltend metallbeschichtete Melamin-Harzfasern, zum Löschen von Bränden und brennenden Gegenständen sowie zum Schutz von Gegenständen durch Feuer.

Brandschutzdecken (dieser Begriff umfaßt auch den häufig verwendeten Begriff Löschdecken) auf der Basis von Glasfasern sind bekannt. Der Nachteil bei der Verwendung von Glasfasern ist, daß Glasfasern spröde sind und, da schmelzbar, im Brandfall durchbrennen können.

Des weiteren sind Brandschutzdecken auf der Basis von Aramiden bekannt. Solche Decken haben den Nachteil eines sehr hohen Preises.

Aufgabe der vorliegenden Erfindung war es daher, Brandschutzdekken zur Verfügung zu stellen, die preiswert und nicht spröde sind und im Brandfall nicht schmelzen.

Demgemäß wurden die Verwendung von metallbeschichteten Melamin-Harzfasern zur Herstellung von Brandschutzdecken gefunden.

Des weiteren wurden ein Verfahren zur Herstellung von Brandschutzdecken, ein Verfahren zum Löschen von Bränden und brennenden Gegenständen, ein Verfahren zum Schutz von Gegenständen vor Feuer, die Verwendung von Brandschutzdecken, enthaltend metallbeschichtete Melamin-Harzfasern, zum Löschen von Bränden und brennenden Gegenständen sowie zum Schutz von Gegenständen durch Feuer, gefunden.

Die Herstellung der Melamin-Harzfasern kann beispielsweise nach den in der EP-A 93 965, DE-A 23 64 091, EP-A 221 330 oder EP-A 408 947 beschriebenen Verfahren erfolgen. Besonders bevorzugte Melamin-Harzfasern enthalten als Monomerbaustein (A) 90 bis 100 Mol-% eines Gemisches bestehend im wesentlichen aus 30 bis 100, bevorzugt 50 bis 99, besonders bevorzugt 85 bis 95 Mol-% Melamin und 0 bis 70, bevorzugt 1 bis 50, besonders bevorzugt 5 bis 15 Mol-% eines substituierten Melamins I oder Mischungen substituierter Melamine I.

Als weiteren Monomerbaustein (B) enthalten die besonders bevorzugten Melamin-Harzfasern 0 bis 10, vorzugsweise von 0,1 bis 2 Mol-%, bezogen auf die Gesamtmolzahl an Monomerbausteinen (A) und (B), eines Phenols oder eines Gemisches von Phenolen.

Die besonders bevorzugten Melamin-Harzfasern sind üblicherweise erhältlich durch Umsetzung der Komponenten (A) und (B) mit Formaldehyd oder Formaldehyd-liefernden Verbindungen, wobei das Molverhältnis von Melaminen zu Formaldehyd im Bereich von 1:1,15 bis 1:4,5, bevorzugt von 1:1,8 bis 1:3,0 liegt, und anschließendes Verspinnen.

Als substituierte Melamine der allgemeinen Formel I 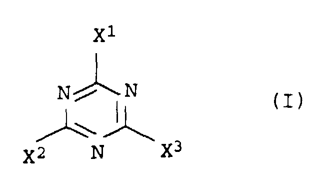 kommen solche in Betracht, in denen X¹, X² und X³ ausgewählt sind aus der Gruppe bestehend aus -NH₂, -NHR¹ und -NR¹R², wobei X¹, X² und X³ nicht gleichzeitig -NH₂ sind, und R¹ und R² ausgewählt sind aus der Gruppe bestehend aus Hydroxy-C₂-C₁₀-alkyl, Hydroxy-C₂-C₄-alkyl-(oxa-C₂-C₄-alkyl)ₙ, mit n = 1 bis 5, und Amino-C₂-C₁₂-alkyl.

Als Hydroxy-C₂-C₁₀-alkyl-Gruppen wählt man bevorzugt Hydroxy-C₂-C₆-alkyl wie 2-Hydroxyethyl, 3-Hydroxy-n-propyl, 2-Hydroxyisopropyl, 4-Hydroxy-n-butyl, 5-Hydroxy-n-pentyl, 6-Hydroxy-n-hexyl, 3-Hydroxy-2,2-dimethylpropyl, bevorzugt Hydroxy-C₂-C₄-alkyl wie 2-Hydroxyethyl, 3-Hydroxy-n-propyl, 2-Hydroxyisopropyl und 4-Hydroxy-n-butyl, besonders bevorzugt 2-Hydroxyethyl und 2-Hydroxyisopropyl.

Als Hydroxy-C₂-C₄-alkyl-(oxa-C₂-C₄-alkyl)ₙ-Gruppen wählt man bevorzugt solche mit n = 1 bis 4, besonders bevorzugt solche mit n = 1 oder 2 wie 5-Hydroxy-3-oxa-pentyl, 5-Hydroxy-3-oxa-2,5-dimethyl-pentyl, 5-Hydroxy-3-oxa-1,4-dimethyl-pentyl, 5-Hydroxy-3-oxa-1,2,4,5-tetramethyl-pentyl, 8-Hydroxy-3,6-dioxaoctyl.

Als Amino-C₂-C₁₂-alkyl-Gruppen kommen bevorzugt Amino-C₂-C₈-alkyl-Gruppen wie 2-Aminoethyl, 3-Aminopropyl, 4-Aminobutyl, 5-Aminopentyl, 6-Aminohexyl, 7-Aminoheptyl sowie 8-Aminooctyl, besonders bevorzugt 2-Aminoethyl und 6-Aminohexyl, ganz besonders bevorzugt 6-Aminohexyl, in Betracht.

Für die Erfindung besonders geeignete substituierte Melamine sind folgende Verbindungen: mit der 2-Hydroxyethylamino-Gruppe substituierte Melamine wie 2-12-Hydroxyethylamino)-4,6-diamino-1,3,5-triazin, 2,4-Di-(2-hydroxyethylamino)-6-amino-1,3,5-triazin, 2,4,6-Tris-(2-hydroxyethylamino)-1,3,5-triazin, mit der 2-Hydroxyisopropylamino-Gruppe substituierte Melamine wie 2-(2-Hydroxyisopropylamino)-4,6-diamino-1,3,5-triazin, 2,4-Di-(2-hydroxyisopropylamino)-6-amino-1,3,5-triazin, 2,4,6-Tris-(2-hydroxyisopropylamino)-1,3,5-triazin, mit der 5-Hydroxy-3-oxa-pentylamino-Gruppe substituierte Melamine wie 2-(5-Hydroxy-3-oxa-pentylamino)-4,6-diamino-1,3,5-triazin, 2,4-Di-(5-hydroxy-3-oxa-pentylamino)-6-amino-1,3,5-triazin, 2,4,6-Tris-(5-hydroxy-3-oxa-pentylamino)-1,3,5-triazin, mit der 6-Aminohexylamino-Gruppe substituierte Melamine wie 2-(6-Aminohexylamino)-4,6-diamino-1,3-triazin, 2,4-Di-(6-aminohexylamino)-6-amino-1,3,5-triazin, 2,4,6-Tris-(6-aminohexylamino)-1,3,5-triazin oder Gemische dieser Verbindungen, beispielsweise ein Gemisch aus 10 Mol-% 2-(5-Hydroxy-3-oxa-pentylamino)-4,6-diamino-l,3,5-triazin, 50 Mol-% 2,4-Di-(5-hydroxy-3-oxa-pentylamino)-6-amino-1,3,5-triazin und 40 Mol-% 2,4,6-Tris-(5-hydroxy-3-oxa-pentylamino)-1,3,5-triazin.

Als Phenole (B) eignen sich ein oder zwei Hydroxygruppen enthaltende Phenole wie unsubstituierte oder mit Resten, ausgewählt aus der Gruppe aus C₁-C₉-Alkyl und Hydroxy, substituierte Phenole sowie mit zwei oder drei Phenolgruppen substituierte C₁-C₄-Alkane, Di(hydroxyphenyl)sulfone oder Mischungen dieser Phenole.

Als bevorzugte Phenole kommen in Betracht Phenol, 4-Methyl-phenol, 4-tert.-Butyl-phenol, 4-n-Octyl-phenol, 4-n-Nonyl-phenol, Brenzcatechin, Resorcin, Hydrochinon, 2,2-Bis(4-hydroxyphenyl)propan, 4,4'-Dihydroxydiphenylsulfon, besonders bevorzugt Phenol, Resorcin und 2,2-Bis(4-hydroxyphenyl)propan.

Formaldehyd setzt man in der Regel als wäßrige Lösung mit einer Konzentration von zum Beispiel 40 bis 50 Gew.-% oder in Form von bei der Umsetzung mit (A) und (B) Formaldehyd liefernden Verbindungen, beispielsweise als oligomeren oder polymeren Formaldehyd in fester Form wie Paraformaldehyd, 1,3,5-Trioxan oder 1,3,5,7-Tetroxocan ein.

Für die Herstellung von Fasern verwendet man vorzugsweise 1 bis 50, besonders bevorzugt 5 bis 15 und insbesondere 7 bis 12 Mol-% des substituierten Melamins sowie üblicherweise 0,1 bis 9,5, bevorzugt 1 bis 5 Mol-% eines der oben angeführten Phenole oder Mischungen derselben.

Zur Herstellung der besonders bevorzugten Melamin-Harzfasern polykondensiert man üblicherweise Melamin, gegebenenfalls substituiertes Melamin und gegebenenfalls Phenol zusammen mit Form aldehyd bzw. Formaldehyd-liefernden Verbindungen. Man kann dabei alle Komponenten gleich zu Beginn vorlegen oder man kann sie portionsweise und sukzessive zur Reaktion bringen und den dabei gebildeten Vorkondensaten nachträglich weiteres Melamin, substituiertes Melamin oder Phenol zufügen.

Die Polykondensation führt man in der Regel in an sich bekannter Weise durch (s. EP-A 355 760, Houben-Weyl, Bd. 14/2, S. 357ff).

Die Reaktionstemperaturen wählt man dabei im allgemeinen in einem Bereich von 20 bis 150, bevorzugt von 40 bis 140°C.

Der Reaktionsdruck ist in der Regel unkritisch. Man arbeitet im allgemeinen in einem Bereich von 100 bis 500 kPa, bevorzugt unter Atmosphärendruck.

Man kann die Reaktion mit oder ohne Lösungsmittel durchführen. In der Regel setzt man beim Einsatz von wäßriger Formaldehydlösung kein Lösungsmittel zu. Bei Verwendung von Formaldehyd gebunden in fester Form wählt man als Lösungsmittel üblicherweise Wasser, wobei die verwendete Menge in der Regel im Bereich von 5 bis 40, bevorzugt von 15 bis 25 Gew.-%, bezogen auf die Gesamtmenge an eingesetzten Monomeren, liegt.

Ferner führt man die Polykondensation im allgemeinen in einem pH-Bereich oberhalb von 7 aus. Bevorzugt ist der pH-Bereich von 7,5 bis 10,0, besonders bevorzugt von 8 bis 9.

Des weiteren kann man dem Reaktionsgemisch geringe Mengen üblicher Zusätze wie Alkalimetallsulfiten, z.B. Natriumdisulfit und Natriumsulfit, Alkalimetallformiaten, z.B. Natriumformiat, Alkalimetallcitrate, z.B. Natriumcitrat, Phosphate, Polyphosphate, Harnstoff, Dicyandiamid oder Cyanamid hinzufügen. Man kann sie als reine Einzelverbindungen oder als Mischungen untereinander jeweils in Substanz oder als wäßrige Lösungen vor, während oder nach der Kondensationsreaktion zusetzen.

Andere Modifizierungsmittel sind Amine sowie Aminoalkohole wie Diethylamin, Ethanolamin, Diethanolamin oder 2-Diethylaminoethanol.

Als weitere Zusatzstoffe kommen Füllstoffe oder Emulgatoren in Betracht.

Als Füllstoffe kann man beispielsweise faser- oder pulverförmige anorganische Verstärkungsmittel oder Füllstoffe wie Glasfasern, Metallpulver, Metallsalze oder Silikate, z.B. Kaolin, Talkum, Schwerspat, Quarz oder Kreide, ferner Pigmente und Farbstoffe einsetzen. Als Emulgatoren verwendet man in der Regel die üblichen nichtionogenen, anionenaktiven oder kationaktiven organischen Verbindungen mit langkettigen Alkylresten.

Die Polykondensation kann man diskontinuierlich oder kontinuierlich, beispielsweise in einem Extruder (s. EP-A 355 760), nach an sich bekannten Methoden durchführen.

Erfindungsgemäß setzt man metallbeschichtete Melamin-Harzfasern ein, bevorzugt Aluminium-beschichtete Melamin-Harzfasern, worunter auch Mischungen aus unbeschichteten und metallbeschichteten Melamin-Harzfasern zu verstehen sind. Insbesondere kann man in an sich bekannter Weise auf die Melamin-Harzfasern beispielsweise Aluminium als Folie oder eine Aluminium-bedampfte Folie aufkleben, oder die Melamin-Harzfasern im Hochvakuum mit Aluminium bedampfen. Üblicherweise wählt man die Schichtdicke der Metall-, insbesondere der Aluminium-Schicht, im Bereich von 10 bis 150 µm, bevorzugt von 50 bis 100 µm.

Zur Herstellung von Fasern verspinnt man in der Regel das erfindungsgemäße Melamin-Harz in an sich bekannter Weise beispielsweise nach Zusatz eines Härters, üblicherweise Säuren wie Ameisensäure, Schwefelsäure oder Ammoniumchlorid, bei Raumtemperatur in einer Rotationsspinnapparatur und härtet anschließend die Rohfasern in einer erhitzten Atmosphäre aus, oder man verspinnt in einer erhitzten Atmosphäre, verdampft dabei gleichzeitig das als Lösungsmittel dienende Wasser und härtet das Kondensat aus. Ein solches Verfahren ist in der DE-A 23 64 091 eingehend beschrieben.

Zur Herstellung von Brandschutzdecken stellt man üblicherweise nach an sich bekannten Methoden aus den Melamin-Harzfasern Garne her, beispielsweise nach dem Streichgarnverfahren. Bevorzugt weisen die Garne eine Feinheit im Bereich von 100 bis 200, besonders bevorzugt von 140 bis 160 tex auf. Aus den Garnen werden dann in der Regel Gewebe nach in der Textilindustrie üblichen Verfahren hergestellt, wobei das Flächengewicht der Gewebe im Bereich von 70 bis 900, vorzugsweise von 120 bis 500 g/m² gewählt wird.

Vliese sind im allgemeinen durch Verarbeitung der Melamin-Harzfasern auf Vliesmaschinen mit Querleger zugänglich. Vliese, die ausschließlich mit Melamin-Harzfasern, beispielsweise Basofil®-Fasern hergestellt werden, weisen bevorzugt ein Flächengewicht im Bereich von 30 bis 600, vorzugsweise von 50 bis 450 g/m² auf.

Nach dem Zuschneiden auf die gewünschten Deckenmaße, die nach bisherigen Beobachtungen nur vom Verwendungszweck abhängen, kann man die Ränder der Decken durch Nähen verfestigen.

Gewünschtenfalls kann man den Melamin-Harzfasern bis zu 25, vorzugsweise bis zu 10 Gew.-% übliche Füllstoffe, insbesondere solche auf der Basis von Silikaten wie Glimmer, Farbstoffe, Pigmente, Metallpulver und Mattierungsmittel, zusetzen und dann zu den entsprechenden Brandschutzdecken und Vliesen verarbeiten.

Man kann in einer bevorzugten Ausführungsform die Melamin-Harzfasern durch Tränken, Bestreichen oder ähnliche Verfahren mit Salzen, insbesondere Silikaten, besonders bevorzugt sind Mg-Al-Silikate, oder schaumentwickelnden Stoffen versetzen.

Erfindungsgemäß lassen sich auch Fasermischungen zu Brandschutzdecken verarbeiten, die im wesentlichen aus 5 bis 95, vorzugsweise von 20 bis 95, besonders bevorzugt von 40 bis 95 Gew.-% metallbeschichteter Melamin-Harzfasern und 95 bis 5, vorzugsweise von 80 bis 5, besonders bevorzugt von 60 bis 5 Gew.-% flammfester Fasern bestehen.

Die Verarbeitung der Fasermischungen nimmt man wie bekannt vor, beispielsweise indem man auf üblichen Fasermisch-Apparaturen wie sie in Vliesstoffe, Georg Thieme Verlag, beschrieben sind, vornimmt. In einer bevorzugten Ausführungsform geht man üblicherweise von Stapelfasern einer üblichen Länge von 1 bis 20 cm aus.

Diese werden im allgemeinen über eine Fördereinrichtung einer Karde zugeführt und dort vorgemischt. Die Vermischung wird dann in der Regel in einer Krempelanlage vervollständigt unter Erhalt einer watteförmigen Bahn. Die so erhaltene wattförmige Bahn wird dann üblicherweise zu Garnen oder Vliesen weiterverarbeitet, wobei die in der Textilindustrie üblichen Verfahren angewandt werden können.

In einer bevorzugten Ausführungsform setzt man als flammfeste Fasern Glasfasern, flammfeste Wolle, flammfeste Viskose und Aramidfasern, besonders bevorzugt Aramidfasern ein. Aramidfasern werden bevorzugt durch Verspinnen von Lösungen von Polykondensationsprodukten der Iso- oder Terephthalsäure oder deren Derivate wie Säurechloride mit para- oder meta-Phenylendiamin in Lösungsmitteln wie N-Methylpyrrolidon, Hexamethylphosphorsäuretriamid, konz. Schwefelsäure oder deren üblichen Mischungen daraus hergestellt. Die erhaltenen Endlosfasern werden dann üblicherweise zu Stapelfasern geschnitten, deren Dicke in der Regel 5 bis 25 µm beträgt. Bevorzugte Aramidfasern sind solche auf der Basis eines isomeren Poly-p-phenylenterephthalamids.

Erfindungsgemäß sind auch Brandschutzdecken zugänglich, die aufgebaut sind aus
(a) 95 bis 5, vorzugsweise von 95 bis 20, besonders bevorzugt von 95 bis 40 Gew.-% metallbeschichteter Melamin-Harzfasern,
(b) 5 bis 95, vorzugsweise von 5 bis 80, besonders bevorzugt von 5 bis 60 Gew.-% flammfester Fasern, ausgewählt aus der Gruppe, bestehend aus Glasfasern, flammfester Wolle, flammfester Viskose und Aramidfasern, und
(c) 0 bis 25, vorzugsweise von 0 bis 10 Gew.-% Füllstoffen, bezogen auf (a) und (b), insbesondere auf der Basis von Silikaten,
mit der Maßgabe, daß, wenn als Komponente (b) ausschließlich Aramidfasern eingesetzt werden, die Menge der Komponente (c) nicht Null ist.

In einer bevorzugten Ausführungsform setzt man aluminiumbeschichtete Melamin-Harzfasern ein.

Als Füllstoffe sind außer den bevorzugten Silikaten, insbesondere Glimmer, die üblichen Füllstoffe einsetzbar wie Farbstoffe, Pigmente, Metallpulver und Mattierungsmittel.

Erfindungsgemäß setzt man die Brandschutzdecken zum Löschen von Bränden ("Löschdecken") und brennenden Gegenständen und Personen ein.

Des weiteren dienen die erfindungsgemäßen Brandschutzdecken zum Schutz von Personen und Gegenständen vor Feuer, indem man die zu schützenden Personen und Gegenstände, insbesondere Häuser und Behälter auf Lastkraftwagen, Zügen oder Schiffen, die brennbare Stoffe enthalten wie Tanklastzüge und Gaskessel, mit den erfindungsgemäßen Brandschutzdecken abdeckt und den Angriff des Feuers abwartet.

Der Vorteil der erfindungsgemäßen Brandschutzdecken und Vliese liegt darin, daß die erfindungsgemäß hergestellten Brandschutzdecken und Vliese nicht beim Erhitzen oder in direkter Berührung mit Feuer oder einer Flamme schmelzen und somit auch keine Tropfenbildung auftritt und die Decken und Vliese daher formstabil sind und bleiben.

### Beispiele

Die Schutzwirkung der beschriebenen Fasern, Vliese und Gewebe wurde an Prüfkörpern gemessen, die in der Richtlinie "Assessment of the ignibility of upholstered seating by smouldering and flaming ignition sources", British Standards BS 5852: 1990, section 3, Crib 5 Verwendung finden.

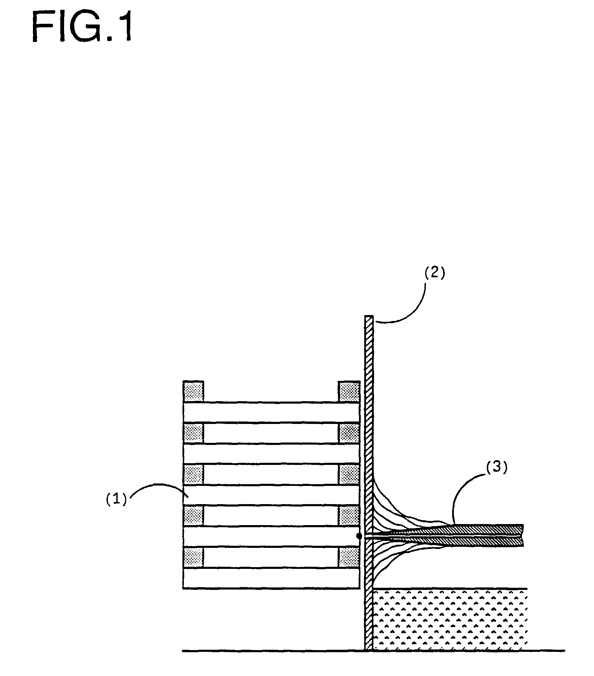

Fig. 1 zeigt die Versuchsanordnung zur Bestimmung der Abschirmwirkung gegenüber Flammen: direkt vor einem zu schützenden Holzstapel (1) wurde das entsprechende erfindungsgemäße Prüfgewebe (2) befestigt. Im Abstand von 70 mm vor dem Gewebe wurde ein Bunsenbrenner (3) montiert, dessen innerer Flammenkegel (reduktive Zone) exakt am Prüfling auf traf (Gasfluß 70 l/h). Die Temperatur in diesem Flammenkegel betrug zwischen 1200 und 1300°C. Ermittelt wurde die Zeit, die zur Entzündung des Holzstapels (1) nach Auftreffen der Flamme auf das Prüfgewebe (2) benötigt wurde (siehe untenstehende Tabelle).

**Tabelle**

| Prüfling | Zeit in [sec] |
|---|---|
| ohne Gewebe | 5 |
| Gewebe aus Melamin-Harzfaser¹ | 210 |
| Gewebe aus Melamin-Harzfaser, aluminiumbeschichtet² | 300 |
| Nadelvlies aus Melamin-Harzfaser³ | 300 |
| Nadelvlies aus Melamin-Harzfaser und p-Aramid-Faser⁴ | 150 |
| Nadelvlies aus Melamin-Harzfaser und p-Aramid-Faser, beschicht mit Mirkolite®⁵ | 180 |

| | |
|---|---|
| 1 Melamin-Harzfaser hergestellt nach Beispiel 1 aus der EP-A 408 947, die Dichte der Fasern betrug 1,43 g/cm³, die Stapellänge 5,08 cm, 2 % der Fasern hatten 0,3 denier per filament (dpf), 8 % 0,9dpf, 21 % 1,5 dpf, 22 % 2,1 dpf, 17 % 2,7 dpf, 13 % 3,3 dpf, 7 % 3,9 dpf, 10 %>3,9 dpf (wobei 1 denier = 1 dtex/1,11, und 1 dtex = 1 g/10,000 m), Flächengewicht: 850 g/m²; | |
| 2 Fasern wie in 1, Al-Schichtdicke 70 µm, Flächengewicht: 850 g/m²; | |
| 3 Fasern wie in 1, Flächengewicht: 430 g/m²; | |
| 4 Melamin-Harzfasern wie in 1,70 Gew.-%, und 30 Gew.-% p-Aramid-Faser, Flächengewicht: 68 g/m²; | |
| 5 Nadelvlies wie in 4, aber mit einer Magnesium-Aluminium-Silikat-Dispersion (Mirkolite©, Fa,Grace) beschichtet (2-3 Gew.-% Dispersion bezogen auf das Gesamtgewicht des Nadelvlieses); | |

## Patentansprüche

1. Verwendung von metallbeschichteten Melamin-Harzfasern zur Herstellung von Brandschutzdecken.

2. Verwendung nach Anspruch 1, dadurch gekennzeichnet, daß die Melamin-Harzfasern erhältlich sind durch Kondensation eines Gemisches, enthaltend als wesentliche Komponenten
(A) 90 bis 100 Mol-% eines Gemisches, bestehend im wesentlichen aus
(a) 30 bis 100 Mol-% Melamin und
(b) 0 bis 70 Mol-% eines substituierten Melamins der allgemeinen Formel I 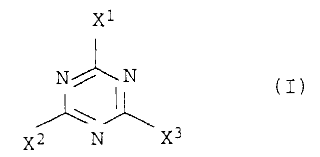 in der X¹, X² und X³ ausgewählt sind aus der Gruppe bestehend aus -NH₂, NHR¹ und NR¹R², und X¹, X² und X³ nicht gleichzeitig -NH₂ sind, und R¹ und R² ausgewählt sind aus der Gruppe bestehend aus Hydroxy-C₂-C₂₀-alkyl,Hydroxy-C₂-C₄-alkyl-(oxa-C₂-C₄-alkyl)ₙ, mit n = 1 bis 5, und Amino-C₂-C₁₂-alkyl, oder Mischungen von Melaminen I, und
(B) 0 bis 10 Mol-%, bezogen auf (A) und (B), unsubstituierter oder mit Resten, ausgewählt aus der Gruppe aus C₁-C₉-Alkyl und Hydroxy, substituierter Phenolen, mit zwei oder drei Phenol-Gruppen substituierter C₁-C₄-Alkanen, Di(hydroxyphenyl)sulfone oder Mischungen dieser Phenole, mit
Formaldehyd oder Formaldehyd-liefernden Verbindungen, wobei das Molverhältnis von Melaminen zu Formaldehyd im Bereich von 1:1,15 bis 1:4,5 liegt.

3. Verwendung nach Anspruch 1 oder 2 von 5 bis 95 Gew.-% metallbeschichteten Melamin-Harzfasern und 95 bis 5 Gew.-% flammfester Fasern.

4. Verwendung nach den Ansprüchen 1 bis 3, dadurch gekennzeichnet, daß man Aluminium-beschichtete Melamin-Harzfasern einsetzt.

5. Brandschutzdecken, enthaltend
(a) 5 bis 95 Gew.-% metallbeschichtete Melamin-Harzfasern, gemäß den Ansprüchen 1 - 4,
(b) 95 bis 5 Gew.-% flammfeste Fasern, ausgewählt aus der Gruppe, bestehend aus Glasfasern, flammfester Wolle, flammfester Viskose und Aramidfasern, und
(c) 0 bis 25 Gew.-% Füllstoffe,
mit der Maßgabe, daß, wenn als Komponente (b) ausschließlich Aramidfasern eingesetzt werden, die Menge der Komponente (c) nicht Null ist.

6. Brandschutzdecken nach Anspruch 5, dadurch gekennzeichnet, daß die Aramidfasern aus einem Polykondensationsprodukt von Iso- oder Terephthalsäure mit einem meta- oder para-Phenylendiamin bestehen.

7. Verfahren zur Herstellung von Brandschutzdecken in an sich bekannter Weise, dadurch gekennzeichnet, daß man Melamin-Harzfasern gemäß den Ansprüchen 1 - 4 zur Herstellung einsetzt.

8. Verfahren zum Löschen von Bränden und brennenden Gegenständen, dadurch gekennzeichnet, daß man Brandschutzdecken gemäß den Ansprüchen 5 oder 6 oder hergestellt gemäß Anspruch 7 einsetzt.

9. Verfahren zum Schutz von Gegenständen vor Feuer, dadurch gekennzeichnet, daß man die zu schützenden Gegenstände mit Brandschutzdecken gemäß den Ansprüchen 5 oder 6 oder hergestellt gemäß Anspruch 7 abdeckt.

10. Verwendung von Brandschutzdecken, enthaltend Melamin-Harzfasern gemäß den Ansprüchen 1 - 4, zum Löschen von Bränden und brennenden Gegenständen, dadurch gekennzeichnet, daß man die Brände oder brennenden Gegenstände mit den Brandschutzdecken abdeckt.

11. Verwendung von Brandschutzdecken, enthaltend Melamin-Harzfasern gemäß den Ansprüchen 1 - 4, zum Schutz von Gegenständen durch Feuer, dadurch gekennzeichnet, daß man die zu schützenden Gegenstände mit den Brandschutzdecken abdeckt.

## Claims

1. The use of metal-coated melamine resin fibers for manufacturing fire-safety blankets.

2. A use as claimed in claim 1, characterized in that the melamine resin fibers are obtainable by condensation of a mixture including as essential components
(A) from 90 to 100 mol% of a mixture consisting essentially of
(a) from 30 to 100 mol% of melamine and
(b) from 0 to 70 mol% of a substituted melamine of the general formula I 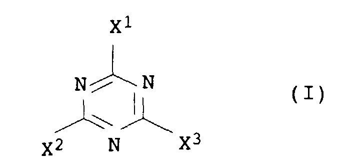 where X¹, X² and X³ are each selected from the group consisting of -NH₂, NHR¹ and NR¹R², and X¹, X² and X³ are not all -NH₂, and R¹ and R² are selected from the group consisting of hydroxy-C₂-C₂₀-alkyl, hydroxy-C₂-C₄-alkyl-(oxa-C₂-C₄-alkyl)ₙ, where n is from 1 to 5, and amino-C₂-C₁₂-alkyl, or mixtures of melamines I, and
(B) from 0 to 10 mol%, based on (A) and (B), of phenols which are unsubstituted or substituted by radicals selected from the group consisting of C₁-C₉-alkyl and hydroxyl, C₁-C₄-alkanes substituted by two or three phenol groups, di(hydroxyphenyl) sulfones, or mixtures of these phenols, with
formaldehyde or formaldehyde-supplying compounds in a molar ratio of melamines to formaldehyde within the range from 1:1.15 to 1:4.5.

3. A use as claimed in claim 1 or 2, of from 5 to 95% by weight of metal-coated melamine resin fibers and from 95 to 5% by weight of flame-retardant fibers.

4. A use as claimed in any of claims 1 to 3, characterized in that aluminum-coated melamine resin fibers are used.

5. Fire-safety blankets comprising
(a) from 5 to 95% by weight of metal-coated melamine resin fibers as claimed in any of claims 1 to 4,
(b) from 95 to 5% by weight of flame-retardant fibers selected from the group consisting of glass fibers, flame-retardant wool, flame-retardant viscose and aramid fibers, and
(c) from 0 to 25% by weight of fillers,
with the proviso that the amount of component (c) is not 0 when component (b) includes aramid fibers exclusively.

6. Fire-safety blankets as claimed in claim 5, characterized in that the aramid fibers are a polycondensation product of iso- or terephthalic acid with a meta- or para-phenylenediamine.

7. A process for manufacturing fire-safety blankets in a conventional manner, characterized in that it comprises using melamine resin fibers as claimed in any of claims 1 to 4 for manufacturing them.

8. A method of extinguishing fires and burning objects, characterized in that it comprises using fire-safety blankets as claimed in claim 5 or 6 or manufactured as claimed in claim 7.

9. A method of protecting objects from fire, characterized in that it comprises covering the objects to be protected with fire-safety blankets as claimed in claim 5 or 6 or manufactured as claimed in claim 7.

10. The use of fire-safety blankets comprising melamine resin fibers as claimed in any of claims 1 to 4 for extinguishing fires and burning objects, characterized in that it comprises covering the fires or burning objects with the fire-safety blankets.

11. The use of fire-safety blankets comprising melamine resin fibers as claimed in any of claims 1 to 4 for protecting objects from fire, characterized in that it comprises using the fire-safety blankets to cover the objects to be protected.

## Revendications

1. Utilisation de fibres de résine de mélamine enduites de métal pour la fabrication de couvertures de protection contre le feu.

2. Utilisation suivant la revendication 1, caractérisée en ce que les fibres de résine de mélamine peuvent être obtenues par condensation d'un mélange, contenant comme composants essentiels,
(A) 90 à 100 moles % d'un mélange, constitué essentiellement de
(a) 30 à 100 moles % de mélamine, et
(b) 0 à 70 moles % d'une mélamine substituée de la formule générale I : 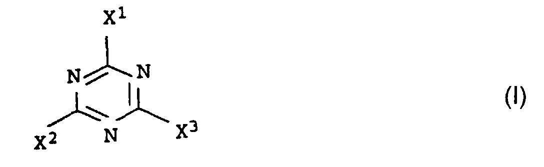 dans laquelle X¹, X² et X³ sont choisis parmi le groupe comprenant -NH₂, NHR¹ et NR¹R², et X¹, X² et X³ ne sont pas simultanément -NH₂, et R¹ et R² sont choisis parmi le groupe comprenant de l'hydroxy-alkyle en C₂-C₂₀, de l'hydroxy-alkyle en C₂-C₄-(oxa- alkyle en C₂-C₄)ₙ, où n est égal à 1 à 5, de l'amino-alkyle en C₂-C₁₂, ou de mélanges de mélamines I, et
(B) 0 à 10 moles %, par rapport (A) et (B), de phénols non substitués ou substitués par des radicaux choisis parmi le groupe comprenant de l'alkyle en C₁-C₉ et de l'hydroxy, d'alcanes en C₁-C₄ substitués par deux ou trois groupes phénol, de di-(hydroxyphényl)-sulfones, ou de mélanges de ces phénols,
avec du formaldéhyde ou des composés fournissant du formaldéhyde, le rapport molaire entre les mélamines et le formaldéhyde étant de l'ordre de 1/1,15 à 1/4,5.

3. Utilisation, suivant l'une des revendications 1 et 2, de 5 à 95% en poids de fibres de résine de mélamine enduites de métal et de 95 à 5% en poids de fibres ignifuges.

4. Utilisation suivant l'une des revendications 1 à 3, caractérisée en ce qu'on met en oeuvre des fibres de résine de mélamine enduites d'aluminium.

5. Couvertures de protection contre le feu, contenant
(a) 5 à 95% en poids de fibres de résine de mélamine enduites de métal, suivant l'une des revendications 1 à 4,
(b) 95 à 5% en poids de fibres ignifuges, choisies parmi le groupe comrpenant des fibres de verre, de la laine ignifuge, de la viscose ignifuge et des fibres d'aramide, et
(c) 0 à 25% en poids de matières de remplissage,
à la condition que, lorsqu'on met en oeuvre, comme composant (b), exclusivement des fibres d'aramide, la quantité du composant (c) n'est pas nulle.

6. Couverture de protection contre le feu suivant la revendication 5, caractérisée en ce que les fibres d'aramide sont constituées d'un produit de polycondensation d'acide isophtalique ou téréphtalique avec une méta-phénylènediamine ou une paraphénylènediamine.

7. Procédé de préparation de couvertures de protection contre le feu d'une manière connue en soi, caractérisé en ce qu'on met en oeuvre des fibres de résine de mélamine suivant l'une des revendications 1 à 4 pour la fabrication.

8. Procédé d'extinction d'incendies et d'objets en train de brûler, caractérisé en ce qu'on met en oeuvre des couvertures de protection contre le feu suivant l'une des revendications 5 et 6 ou fabriquées selon la revendication 7.

9. Procédé de protection d'objets contre le feu, caractérisé en ce qu'on couvre les objets à protéger avec des couvertures de protection contre le feu suivant l'une des revendications 5 et 6 ou préparées selon la revendication 7.

10. Utilisation de couvertures de protection contre le feu, contenant des fibres de résine de mélamine suivant l'une des revendications 1 à 4, pour éteindre des incendies et des objets en train de brûler, caractérisée en ce qu'on couvre les incendies ou objets en train de brûler par les couvertures de protection contre le feu.

11. Utilisation de couvertures de protection contre le feu, contenant des fibres de résine de mélamine suivant l'une des revendications 1 à 4, pour la protection d'objets vis-à-vis du feu, caractérisée en ce qu'on couvre les objets à protéger par les couvertures de protection contre le feu.
